# EUROPÄISCHE PATENTSCHRIFT

(11) **EP 3 439 765 B1**
(45) Veröffentlichungstag und Bekanntmachung des Hinweises auf die Patenterteilung: **14.10.2020**
(21) Anmeldenummer: 17719176.4
(22) Anmeldetag: 04.04.2017
(51) Int. Cl.: B01D 53/04, B01D 53/30

(54) **LUFTAUFBEREITUNGSVORRICHTUNG UND -VERFAHREN**
AIR TREATMENT DEVICE AND AIR TREATMENT METHOD
DISPOSITIF ET PROCÉDÉ D'ÉPURATION D'AIR

(30) Priorität: 05.04.2016 DE 102016106225
(43) Veröffentlichungstag der Anmeldung: 13.02.2019
(73) Patentinhaber: Krinner Drucklufttechnik GmbH, 85662 Hohenbrunn (DE)
(72) Erfinder: Krinner, August, 85662 Hohenbrunn (DE)
(74) Vertreter: Wachenhausen & Kollegen Patentanwälte GbR
(86) Internationale Anmeldenummer: PCT/EP2017/057954
(87) Internationale Veröffentlichungsnummer: WO 2017/174561

(56) Entgegenhaltungen:
- WO-A1-2005/011847
- WO-A1-2015/082567
- DE-A1-102014 108 874

## Beschreibung

### TECHNISCHES GEBIET

Die vorliegende Erfindung betrifft eine Luftaufbereitungsvorrichtung sowie ein Luftaufbereitungsverfahren.

Die Verwendung von aufbereiteter Luft mit reduziertem Kohlendioxidgehalt hat sich bei unterschiedlichen Anwendungen medizinischer und technischer Natur als vorteilhaft erwiesen. Auch in der Innenraumluft hat der Kohlendioxidgehalt eine große Bedeutung, da dieser ein Maß für die Raumluftqualität ist. In Studien wird davon ausgegangen, dass das Innenraumklima Gesundheit, Produktivität und Behaglichkeit der Nutzer beeinflusst. Dies ist besonders in kleinen Räumen mit einer großen Anzahl von Personen der Fall. Als besonders problematisch haben sich aber auch Räume erwiesen, die von einem größeren Personenkreis für längere Zeit benutzt werden, beispielsweise Klassenzimmer. Die Kohlendioxidkonzentration kann in solchen Räumen, insbesondere bei falschem Lüftungsverhalten, in Bereiche ansteigen, in denen die Raumluftqualität als gering eingestuft werden muss. WO 2015082567 offenbart eine Luftaufbereitungsvorrichtung mit einer Kohlendioxidadsorptionsvorrichtung zur Erzeugung von Luft mit reduziertem Kohlendioxidgehalt, wobei die Kohlendioxidadsorptionsvorrichtung mit einem Spülmedium regenerierbar ist.

Es besteht daher ein Bedarf an einer Vorrichtung und an einem Verfahren zum Bereitstellen von Luft mit reduziertem Kohlendioxidgehalt. Zum Reduzieren des Kohlendioxidgehalts sind Kohlendioxidadsorptionsvorrichtungen bekannt, welche Kohlendioxid aus Luft oder anderen Gasen herausfiltern können. Derartige Filter können das Kohlendioxid in einem entsprechenden Adsorptionsmittel binden, bis ein darin enthaltenes Adsorptionsmittel gesättigt ist und keine weitere Aufnahme bzw. Adsorption von Kohlendioxid mehr möglich ist. Kann das Adsorptionsmittel Kohlendioxid nicht mehr oder in zu geringem Maß aufnehmen, so muss das Adsorptionsmittel entweder ersetzt oder regeneriert werden. Die Regenerierung kann beispielsweise mit einem Spülmedium erfolgen, welches durch die Kohlendioxidadsorptionsvorrichtung bzw. das Adsorptionsmittel geleitet wird, um das Kohlendioxid aus dem Adsorptionsmittel herauszulösen und abzutransportieren.

### ZUSAMMENFASSUNG DER ERFINDUNG

Es ist die Aufgabe der vorliegenden Erfindung eine verbesserte Luftaufbereitungsvorrichtung und ein verbessertes Luftaufbereitungsverfahren zu schaffen.

Erfindungsgemäß wird dazu sichergestellt, dass eine Regenerierung der Kohlendioxidadsorptionsvorrichtung optimal abläuft.

Dazu ist eine Luftaufbereitungsvorrichtung geschaffen mit:
einer Kohlendioxidadsorptionsvorrichtung zur Erzeugung von Luft mit reduziertem Kohlendioxidgehalt, wobei die Kohlendioxidadsorptionsvorrichtung mit einem Spülmedium regenerierbar ist;
einer Regelungseinrichtung, die eine Zusammensetzung des Spülmediums basierend auf einer Eingangsgröße bestimmt und als Signal ausgibt;
einer Eingangsgrößenbestimmungsvorrichtung zum Bestimmen der Eingangsgröße und zum Ausgeben derselben an die Regelungseinrichtung; und
einer Einstelleinrichtung, die basierend auf dem von der Regelungseinrichtung ausgegebenen Signal die Zusammensetzung des zur Regenerierung in die Kohlendioxidadsorptionsvorrichtung einzuleitenden Spülmediums einstellt.

Erfindungsgemäß wird somit das Spülmedium bzw. dessen Zusammensetzung regelungstechnisch eingestellt, um eine optimale Regenerierungsleistung zu erzielen. Auf diese Weise wird sichergestellt, dass die Kohlendioxidadsorptionsvorrichtung wieder in einen Zustand gebracht wird, in der Sie eine möglichst gute Adsorptionsfähigkeit aufweist.

Dazu wird die Regelungseinrichtung verwendet, die die geeignete Zusammensetzung des Spülmediums basierend auf einer Vielzahl von unterschiedlichen Eingangsgrößen bestimmen kann und ein entsprechendes Signal zur weiteren Verarbeitung ausgeben kann. Die Regelungseinrichtung kann dazu einzelne Eingangsgrößen oder mehrere Eingangsgrößen gemeinsam verwenden, um die Zusammensetzung des Spülmediums zu bestimmen.

Die Eingangsgrößen werden von einer Eingangsgrößenbestimmungsvorrichtung bestimmt und an die Regelungseinrichtung in Form eines Signals ausgegeben. Dabei kann die Eingangsgrößenbestimmungsvorrichtung die Eingangsgröße messwertbasiert, zeitwertbasiert und/oder ereignisbasiert bestimmen. Messwertbasiert soll dabei im Rahmen der vorliegenden Erfindung dahingehend verstanden werden, dass die Eingangsgrößenbestimmungsvorrichtung einen Wert erfasst, beispielsweise durch einen Sensor. Ein solcher Wert kann dann beispielsweise mit vorgegebenen Werten verglichen werden, um eine Abweichung zu den vorgegebenen Werten zu bestimmen.
Vorzugsweise erfasst die Eingangsgrößenbestimmungsvorrichtung einen bestimmten Wert, beispielsweise den Kohlendioxidgehalt, an einer bestimmten Stelle des Systems. Beispielsweise kann der Kohlendioxidgehalt des Spülmediums erfasst werden kann, nachdem dieses für die Regenerierung verwendet wurde und somit Kohlendioxid enthält, welches in der Kohlendioxidadsorptionsvorrichtung adsorbiert war. Dazu kann in einer entsprechenden Leitung des Systems ein Kohlendioxidsensor vorgesehen sein.

Neben der Erfassung von bestimmten Zustandsgrößen im System ist es jedoch auch möglich, dass die Eingangsgrößenbestimmungsvorrichtung zeitliche Komponenten im Prozessablauf erfasst. So kann die Eingangsgrößenbestimmungsvorrichtungen beispielsweise eingerichtet sein, um die Anzahl an Regenerierungsvorgängen zu erfassen. Des Weiteren ist es möglich, dass die Eingangsgrößenbestimmungsvorrichtung die jeweilige Dauer der vorangehenden Regenerierungsvorgänge erfasst.

Es ist auch möglich, zusätzlich zu der Eingangsgrößenbestimmungsvorrichtung ein Mittel vorzusehen, welches die Ausgabe des Signals von der Eingangsgrößenbestimmungsvorrichtung dahingehend beeinflusst, dass statt des Signals der Eingangsgrößenbestimmungsvorrichtung ein vorbestimmtes Signal ausgegeben wird, wenn eine vorbestimmte Bedingung erfüllt ist. Beispielsweise kann es gewünscht sein, die Kohlendioxidadsorptionsvorrichtung manuell in einen Zustand mit bestmöglicher Regenerierung zu versetzen. In diesem Fall ist es möglich, beispielsweise durch manuelle Betätigung eines Schalters eine Übermittlung des Signals der Eingangsgrößenbestimmungsvorrichtung an die Regelungseinrichtung zu unterbinden und der Regelungseinrichtung ein Signal zuzuführen, welches eine für diesen Fall optimale Regenerierung bewirkt. Die Regelungseinrichtung kann in diesem Fall dann die Zusammensetzung des Spülmediums dahingehend bestimmten, dass dieses eine erhöhte Regenerationsleistungsfähigkeit besitzt, also das in der Kohlendioxidadsorptionsvorrichtung adsorbierte Kohlendioxid besser aufzunehmen und abzutransportieren.

Das von Regelungseinrichtung ausgegebene Signal wird der Einstelleinrichtung zugeführt, die basierend auf diesem Signal die Zusammensetzung des für die Regenerierung in die Kohlendioxidadsorptionsvorrichtung einzuleitenden Spülmediums einstellt. Dabei kann die Einstelleinrichtung so ausgestaltet sein, dass unterschiedliche Gase und oder Gasgemische zur Verfügung stehen, deren Kombination bzw. Mischung die Einstelleinrichtung abhängig von dem Signal der Regelungseinrichtung vornehmen kann. Zu diesem Zweck kann die Einstelleinrichtung mit unterschiedlichen Quellen verbunden sein, aus denen Gaskomponenten oder Gemische zum Bilden des Spülmediums bzw. zur Verwendung als Spülmedium bereitgestellt werden. Beispielsweise kann die Einstelleinrichtung eine Mischkammer aufweisen, in die mehrere Zufuhrleitungen münden. Die Zufuhrleitungen sind dabei wiederum mit entsprechenden Quellen von Gasen bzw. Gasgemischen verbunden. Ferner kann die Einstelleinrichtung Ventile in den Zufuhrleitungen aufweisen, welche es ermöglichen, selektiv und in unterschiedlicher Menge die jeweils zuzuführenden Medien mit einem bestimmten Mischungsverhältnis oder in deren Reinform in die Mischkammer auszugeben. Die Einstelleinrichtung bildet somit auf der Grundlage des von der Regelungseinrichtung erhaltenen Signals das Gemisch aus den zur Verfügung stehenden Komponenten. In dem vorstehend beschriebenen Beispiel kann über eine Ausgangsleitung das so erzeugte Spülmedium an die Kohlendioxidadsorptionsvorrichtung abgegeben werden.

Alternativ kann die Einstelleinrichtung jedoch auch nur den Kohlendioxidgehalt eines verwendeten Spülmediums beeinflussen. Beispielsweise ist ein Aufbau denkbar, bei dem eine Stickstoffquelle mit einer Leitung verbunden ist, durch die ein Spülmedium, beispielsweise von der Kohlendioxidadsorptionsvorrichtung erzeugte Luft mit reduziertem Kohlendioxidgehalt, zur Regenerierung in die Kohlendioxidadsorptionsvorrichtung rückgeführt wird. Die Einstelleinrichtung kann dann beispielsweise in Form eines Regelventils vorgesehen sein, durch welches die Zudosierung von Stickstoff gesteuert werden kann.

Durch das Zusammenspiel von Regelungseinrichtung, Eingangsgrößenbestimmungsvorrichtung und Einstelleinrichtung ist es somit möglich, die Zusammensetzung des in die Kohlendioxidadsorptionsvorrichtung einzuleitenden Spülmediums bedarfsweise zu erzeugen. Die Einstelleinrichtung kann dabei beispielsweise eine Mischkammer, Wegeventile und/oder Dosierventile aufweisen. Des Weiteren kann die Einstelleinrichtung zusätzliche Funktionen erfüllen, wie beispielsweise die Verbindung der Kohlendioxidadsorptionseinheit mit einem Auslass der Luftaufbereitungsvorrichtung zum Abführen von erzeugter Luft mit reduziertem Kohlendioxidgehalt.

Die Kohlendioxidadsorptionsvorrichtung weist zwei Kohlendioxidadsorptionseinheiten auf, die mit der EinStelleinrichtung so verbunden sind, dass Luft mit reduziertem Kohlendioxidgehalt zur Einstellung der Zusammensetzung des Spülmediums verwendet werden kann. Gemäß diesem Ausfiihrungsbeispiel wird somit Luft mit reduziertem Kohlendioxidgehalt zur Bildung des Spülmediums zur Verfügung gestellt. Die Einstelleinrichtung kann somit entweder einen bestimmten Anteil bzw. eine bestimmte Menge Luft mit reduziertem Kohlendioxidgehalt mit einer anderen Komponente vermischen oder ausschließlich Luft mit reduziertem Kohlendioxidgehalt als Spülmedium ausgeben.

Die in der Kohlendioxidadsorptionsvorrichtung enthaltenen Kohlendioxidadsorptionseinheiten können mit der Einstelleinrichtung ausgangsseitig verbunden sein. Als Ausgänge sind dabei in Strömungsrichtung insbesondere die Seiten der Kohlendioxidadsorptionseinheiten anzusehen, aus denen beim Betrieb der Luftaufbereitungsvorrichtung Luft mit reduziertem Kohlendioxidgehalt aus den Kohlendioxidadsorptionseinheiten austritt. Die Luft mit reduziertem Kohlendioxidgehalt kann dabei entweder aus entsprechenden Ausgangsleitungen abgezweigt werden oder die Ausgangsleitungen können direkt in die Einstelleinrichtung münden.

Im Falle, dass die Ausgangsleitungen unmittelbar in die Einstelleinrichtung münden, kann die Einstelleinrichtung so aufgebaut sein, dass diese neben den vorstehend beschriebenen Funktionen auch die Funktion eines Wegeventils aufweist. In diesem Fall kann die Einstelleinrichtung beispielsweise ausgestaltet sein, die aus einer Kohlendioxidadsorptionseinheit abgegebene Luft mit reduziertem Kohlendioxidgehalt im Gegenstrom in die andere Kohlendioxidadsorptionseinheit zu Regenerierungszwecken einzuleiten. Abhängig davon, wie die Einstelleinrichtung das Spülmedium zusammensetzt, kann dabei beispielsweise ausschließlich Luft mit reduziertem Kohlendioxidgehalt im Gegenstrom in die andere, zu regenerieren der Kohlendioxidadsorptionseinheit eingeleitet werden. Auch bei diesem Aufbau der Einstelleinrichtung können jedoch eine oder mehrere Gasquellen, welche ein Gas zur Bildung der Zusammensetzung des Spülmediums bereitstellen, mit der Einstelleinrichtung verbunden sein. Auf diese Weise kann beispielsweise basierend auf der von einer Kohlendioxidadsorptionseinheit gewonnenen Luft mit reduziertem Kohlendioxidgehalt eine weitere Gaskomponente beigemengt werden, um die Regenerierungseffizienz in der zweiten Kohlendioxidadsorptionseinheit zu verbessern. In diesem Fall kann die Einstelleinrichtung so ausgebildet sein, dass diese einen Teil der Luft mit reduziertem Kohlendioxidgehalt zu einem gewissen Anteil aus der Kohlendioxidadsorptionsvorrichtung abführt, also den Ausgang der adsorbierenden Kohlendioxidadsorptionseinheit so mit einem Ausgang bzw. Auslass der Luftaufbereitungsvorrichtung zu verbinden, dass dort Luft mit reduziertem Kohlendioxidgehalt zur weiteren Verwendung zur Verfügung steht. Die Einstelleinrichtung kann demnach so ausgebildet sein, dass ein Teil der erzeugten Luft mit reduziertem Kohlendioxidgehalt für die Bildung des Spülmediums oder als Spülmedium verwendet wird.

Wie bereits vorstehend erwähnt weist die Kohlendioxidadsorptionsvorrichtung zwei Kohlendioxidadsorptionseinheiten auf die abwechselnd in einen Zustand gebracht werden können, in welchem Kohlendioxid adsorbiert wird, und in einen Zustand gebracht werden können, in welchem diese regeneriert werden. Um einen kontinuierlichen Betrieb der Luftaufbereitungsvorrichtung zu gewährleisten, sind die Kohlendioxidadsorptionseinheiten über geeignete Schaltmittel, beispielsweise Wegeventile, und Leitungen so miteinander verbunden, dass diese abwechselnd betrieben und regeneriert werden können. Auf diese Weise ist es möglich, eine Kohlendioxidadsorptionseinheit zur Erzeugung von Luft mit reduziertem Kohlendioxidgehalt zu verwenden während gleichzeitig die andere Kohlendioxidadsorptionseinheit regeneriert wird. Die zum Umschalten vorgesehenen Ventile sind dabei so ausgelegt, dass die beiden Kohlendioxidadsorptionseinheiten auf einfache Weise zwischen diesen beiden Zuständen umgeschaltet werden können und diese Schaltmittel und Leitungen können Elemente der Einstelleinrichtung sein.

Die Luftaufbereitungsvorrichtung weist ferner eine Stickstoffquelle auf, die mit der Einstelleinrichtung so verbunden ist, dass zur Einstellung der Zusammensetzung des Spülmediums Stickstoff verwendet werden kann. Die Stickstoffquelle kann ein Gas oder Gasgemisch mit einen gegenüber Luft erhöhten Stickstoffgehalt bereitstellen. Vorzugsweise stellt die Stickstoffquelle reinen Stickstoff bereit. Die Stickstoffquelle kann über eine entsprechende Zufuhrleitung mit der Einstelleinrichtung verbunden sein. Auf diese Weise ist es möglich, Stickstoff aus der Stickstoffquelle in die Einstelleinrichtung zuzuführen, um die Zusammensetzung des Spülmediums zu beeinflussen oder um Stickstoff als Spülmedium zu verwenden.

Die Stickstoffquelle kann ein Anschluss zu einem Stickstoffbereitstellungssystem sein, kann ein Gasbehälter sein oder kann ein Gasgenerator sein. Auch eine Kombination aus den vorstehend genannten Stickstoffquellen ist möglich. Beispielsweise kann ein Gasgenerator in Verbindung mit einem Gasbehälter verwendet werden, wobei der Gasbehälter als Zwischenspeicher von in dem Gasgenerator erzeugtem Stickstoff dienen kann. Auf diese Weise muss der Gasgenerator nicht durchgehend zur Bereitstellung von Stickstoff betrieben werden. Vielmehr kann das in dem Gasbehälter enthaltene Gas verwendet werden und bei Feststellung, dass ein vorab festgelegter Mindestinhalt in dem Gasbehälter unterschritten wird, der Gasgenerator benutzt werden, um die Gasmenge im Gasbehälter aufzufüllen.

Durch den Gasbehälter kann der Stickstoff beispielsweise flüssig oder gasförmig bereitgehalten werden.

Der Gasgenerator, welcher zur Erzeugung des Stickstoffs verwendet werden kann, kann einen Druckluftverdichter, eine nachgeschaltete Luftaufbereitung, beispielsweise einen Kühler, einen Luftfilter und/oder eine nachgeschaltete Trocknung, und eine nachgeschaltete Stickstoffmembran aufweisen. Die Stickstoffmembran dient als Trennvorrichtung zum Abtrennen von Stickstoff aus druckbeaufschlagter Luft. Der so gewonnene Stickstoff kann dann über eine Leitung der Einstelleinrichtung zur Verfügung gestellt werden, um die Zusammensetzung des Spülmediums zu beeinflussen. Gemäß einer weiteren vorteilhaften Ausführungsform der vorliegenden Erfindung hat die Luftaufbereitungsvorrichtung eine Druckregeleinrichtung, die zumindest dann, wenn sich die Kohlendioxidadsorptionsvorrichtung in einem betriebslosen Zustand befindet, den Innendruck der Kohlendioxidadsorptionseinheiten überwacht und bei unterschreiten eines vorbestimmten Schwellenwerts auf einen Sollinnendruck erhöht.

Ein ausreichender Druck im Inneren der Kohlendioxidadsorptionseinheiten im Stillstand des Systems kann ein Eintreten von Feuchte in die Kohlendioxidadsorptionseinheiten verhindern. Auf diese Weise wird bei Stillstand der Kohlendioxidadsorptionsvorrichtung eine Verschlechterung der Reinigungseffizienz der Kohlendioxidadsorptionseinheiten verhindert. Die Druckregeleinrichtung kann zu diesem Zweck wenigstens einen Drucksensor aufweisen, der den Druck im Inneren der Kohlendioxidadsorptionseinheiten überwachen kann. Dazu kann ein Drucksensor über entsprechende Leitungen mit den beiden Kohlendioxidadsorptionseinheiten verbunden sein. Alternativ ist es jedoch auch möglich, für jede Kohlendioxidadsorptionseinheit einen Drucksensor zur Drucküberwachung zu verwenden. Ferner kann die Druckregeleinrichtung beispielsweise über ein Steuerventil mit einer Druckquelle in Verbindung stehen, welche druckbeaufschlagte Luft zur Verfügung stellt. Wird ein wie vorstehend beschriebener Stickstoffgenerator eingesetzt, so können die darin enthaltenen Komponenten Verdichter, Luftaufbereitung, und Trockner dazu verwendet werden, um die Druckluft bereitzustellen. In diesem Fall kann die erzeugte, aufbereitete und getrocknete Druckluft vor der Stickstoffmembran abgeleitet werden.

Die Druckregeleinrichtung ist somit dazu in der Lage, den Druck in den beiden Behältern zu erfassen und einem Druckabfall entsprechend entgegenzuwirken, beispielsweise über Betätigung eines entsprechenden Ventils, um ein Einströmen von Druckluft zu gestatten. Dazu kann die Druckregeleinrichtung dann, wenn festgestellt wurde, dass der vorbestimmte Schwellenwert des Innendrucks unterschritten wurde, die Luftdruckquelle derart betreiben, dass ein Sollinnendruck in den Kohlendioxidadsorptionseinheiten wiederhergestellt wird. Es kann demnach so lange Druckluft in die Kohlendioxid Adsorptionseinheiten eingeführt werden, bis der Sollinnendruck erreicht ist. Anschließend kann der Betrieb der Luftdruckquelle eingestellt werden bzw. kann ein Zufuhrventil geschlossen werden.

Gemäß einer vorteilhaften Ausführungsform der vorliegenden Erfindung kann die Eingangsgrößenbestimmungsvorrichtung einen Sensor aufweisen, der den Regenerationsgrad der Kohlendioxidadsorptionsvorrichtung erfasst.

Der Regenerationsgrad der Kohlendioxidadsorptionsvorrichtung lässt sich beispielsweise dadurch bestimmen, dass der Kohlendioxidgehalt des Spülmediums, welches bei der Regeneration aus den Kohlendioxidadsorptionseinheiten abgeleitet wird, überwacht wird. Zu diesem Zweck kann ein Kohlendioxidsensor verwendet werden. Der Kohlendioxidgehalt des aus der Kohlendioxidadsorptionseinheiten abgeleiteten Spülmediums kann dabei Aufschluss darüber geben, wie weit die Regeneration der Kohlendioxidadsorptionseinheiten vorangeschritten ist. Je geringer der Kohlendioxidgehalt in dem Spülmedium ist, desto weiter ist die Regeneration der Kohlendioxidadsorptionseinheiten vorangeschritten.

Gemäß einer weiteren Ausführungsform der vorliegenden Erfindung weist die Emgangsgrößenbestimmungsvorrichtung einen Kohlendioxidsensor zum Messen des Kohlendioxidgehalts eines während der Regeneration aus einer der Kohlendioxidadsorptionseinheiten abgeführten Spülmediums auf. Auf diese Weise lässt sich der Kohlendioxidgehalt des aus den Kohlendioxidadsorptionseinheiten bei der Regenerierung abgeführten Spülmediums direkt ermitteln. Der Kohlendioxidgehalt in dem abgeführten Spülmedium erlaubt einen direkten Rückschluss auf den Fortschritt des Regenerationsprozesses. Wird beispielsweise durch den Kohlendioxidsensor ein Kohlendioxidgehalt ermittelt, der unter einem vorbestimmten Wert liegt, so gilt die Kohlendioxidadsorptionseinheiten als vollständig regeneriert. Andererseits kann dann, wenn der gemessene Kohlendioxidgehalt einen vorbestimmten Wert übersteigt, die Kohlendioxidadsorptionseinheiten als nicht vollständig regeneriert gelten. Dabei kann der Kohlendioxidgehalt durch den Sensor entweder kontinuierlich gemessen oder in bestimmten zeitlichen Abständen.

Vorteilhafterweise kann die Regelungseinrichtung die Zusammensetzung des Spülmediums abhängig vom erfassten Regenerationsgrad und beispielsweise abhängig vom gemessenen Kohlendioxidgehalt ändern. Auf diese Weise sind unterschiedliche Regelungen denkbar. Bei kontinuierlicher Überwachung des Kohlendioxidgehalts in dem abgegebenen Spülmedium kann die Regelungseinrichtung beispielsweise einen Vergleich mit einem vorbestimmten zeitlichen Verlauf eines Kohlendioxidgehalts vornehmen und bei Abweichungen des Kohlendioxidgehalts von einem vorgegebenen Kohlendioxidgehalt die Zusammensetzung des Spülmediums beispielsweise dahingehend beeinflussen, dass dessen Stickstoffgehalt erhöht wird. Auf diese Weise wird gewährleistet, dass das Spülmedium eine höhere Reinigungseffizienz erhält und damit mehr Kohlendioxid aus der Kohlendioxidadsorptionseinheiten entfernt werden kann. Alternativ, beispielsweise bei einer fest vorgegebenen Dauer eines Regenerationszyklus, ist es auch denkbar, den Kohlendioxidgehalt in dem abgeführten Spülmedium kontinuierlich zu überwachen und dann, wenn eine vorbestimmte Zeit des Reinigungsbetriebes Regenerierungszyklus ist vergangen ist, zu prüfen, ob der Kohlendioxidgehalt in dem abgeführten Spülmedium einen vorbestimmten Wert übersteigt. Die Abweichung von diesem vorbestimmten Wert kann als ein Hinweis darauf gelten, dass die Regenerierung unter Verwendung des derzeitigen Spülmediums bis zum Ende der vorgegebenen Zykluszeit mit großer Wahrscheinlichkeit nicht vollständig ausgeführt werden kann. Auf der Grundlage dieses erfassten Werts kann die Regelungseinrichtung somit die Zusammensetzung des Spülmediums so verändern, dass dieses zum Ende des Reinigungszyklus hin eine erhöhte Reinigungseffizienz besitzt, beispielsweise durch Erhöhung des Stickstoffanteils. Bei dieser Ausführungsform wird somit die Eingangsgröße, die von der Eingangsgrößenbestimmungsvorrichtung ermittelt wird, messwertbasiert erzeugt. Die von dem Sensor erfassten Werte können dabei den aktuellen Zustand der regenerierenden Kohlendioxidadsorptionseinheiten darstellen.

Gemäß einer weiteren vorteilhaften Ausführungsform der vorliegenden Erfindung weist die Eingangsgrößenbestimmungsvorrichtung einen Zähler auf, der die Anzahl an durchgeführten Regenerationszyklen erfasst. Dabei kann der Zähler insbesondere die Anzahl an durchgeführten Regenerationszyklen von jeder Kohlendioxidadsorptionseinheit erfassen. Mit Regenerationszyklus ist dabei ein Ablauf einer Regeneration einer Kohlendioxidadsorptionseinheit gemeint. Insbesondere ist damit ein Regenerationsvorgang gemeint, der stattfindet, während eine andere Kohlendioxidadsorptionseinheit Kohlendioxid adsorbiert und Luft mit reduziertem Kohlendioxidgehalt ausgibt. Die Regelungseinrichtung kann den Stickstoffgehalt des Spülmediums durch Zugabe von Stickstoff für einen oder mehrere Regenerationszyklen erhöhen, wenn die vom Zähler erfasste Anzahl an durchgeführten Regenerationszyklen eine vorbestimmte Anzahl übersteigt. Auf diese Weise ist es beispielsweise möglich, einen Zeitraum von insgesamt 10 Regenerationszyklen zu betrachten, wobei beispielsweise eingerichtet sein kann, dass bei jedem zehnten Regenerationszyklus eine Spülung mit reinem Stickstoff erfolgt. Alternativ kann beispielsweise bei einem Regenerationszyklus auch ein Spülmedium mit erhöhtem Stickstoffgehalt verwendet werden. Es ist somit auf diese Weise möglich, mehrere Regenerationszyklen vorzusehen, bei denen beispielsweise ausschließlich Luft mit reduziertem Kohlendioxidgehalt, welche von einer Kohlendioxidadsorptionseinheit ausgegeben wird, zu verwenden, und dann nach einer vorbestimmten Anzahl an durchgeführten Regenerationszyklen einen Regenerationszyklus vorzusehen, bei dem mit reinem Stickstoff gespült wird, also reiner Stickstoff als Spülmedium verwendet wird. Es wird demnach nach einer bestimmten Anzahl von Regenerierungen eine Regenerierung mit reinem Stickstoff oder mit einem Spülmedium durchgeführt, welches eine erhöhte Reinigungseffizienz gegenüber dem in den vorherigen Regenerierungen verwendeten Spülmedium, beispielsweise Luft mit reduziertem Kohlendioxidgehalt, aufweist.

Gemäß einer vorteilhaften Ausführungsform der vorliegenden Erfindung kann eine Regenerierung mit reinem Stickstoff oder einem Spülmedium mit gegenüber einem normalerweise verwendeten Spülmedium erhöhter Reinigungseffizienz auch ereignisbasiert durchgeführt werden. Ein solches Ereignis kann beispielsweise vorliegen, wenn die Maschine in einen Zustand überführt wird, vor dem sie noch einmal vollständig regeneriert werden soll. Ein solcher Fall kann beispielsweise vorliegen, wenn die Luftaufbereitungsvorrichtung längere Zeit außer Betrieb genommen werden soll. Um zu gewährleisten, dass die Luftaufbereitungsvorrichtung für die Wiederaufnahme des Betriebs vollständig regeneriert ist, kann die Eingangsgrößenbestimmungsvorrichtung dieses Ereignis erfassen, beispielsweise aufgrund eines Signals, welches durch betätigen eines entsprechenden Schalters ausgegeben wird. Beispielsweise kann vorgesehen sein, dass dann, wenn die Luftaufbereitungsvorrichtung durch betätigen eines Schalters außer Betrieb gesetzt wird, da keine weitere Luft mit reduziertem Kohlendioxidgehalt benötigt wird, die Luftaufbereitungsvorrichtung in einen Zustand versetzt wird, in dem beide Kohlendioxidadsorptionseinheiten vollständig regeneriert werden. Um eine solche Regenerierung herbeizuführen, kann die Luftaufbereitungsvorrichtung so ausgestaltet sein, dass ein Spülmedium zugeführt werden kann, welches ohne Beimischen von Luft mit reduziertem Kohlendioxidgehalt, welche von der Luftaufbereitungsvorrichtung erzeugt wurde, auskommt. Ist beispielsweise eine Stickstoffquelle vorhanden, so kann aus dieser Stickstoffquelle reiner Stickstoff zum Lösen des adsorbierten Kohlendioxids in die Kohlendioxidadsorptionseinheiten eingeleitet werden.

Gemäß einer weiteren bevorzugten Ausführungsform der vorliegenden Erfindung kann die Eingangsgrößenbestimmungsvorrichtung einen Zeitmesser aufweisen, der die seit Beginn eines Regenerationszyklus verstrichene Zeit erfasst, wobei die Regelungseinrichtung den Stickstoffgehalt des Spülmediums durch Zugabe von Stickstoff erhöhen kann, wenn eine vorbestimmte Zeit seit Beginn des Regenerationszyklus vergangen ist.

Ein derartiges Erzeugen der Eingangsgröße gestattet eine zeitbasierte Regelung. Genauer gesagt ist es möglich, eine Regenerierung so zu gestalten, dass nach einer gewissen Zeit die Zusammensetzung des Spülmediums geändert wird oder die Zusammensetzung im zeitlichen Verlauf geändert wird. Beispielsweise kann festgelegt werden, dass bei jeder Regeneration bzw. jedem Regenerationszyklus zunächst für eine vorbestimmte Zeit ein Spülmedium mit stark verbesserter Reinigungseffizienz eingeleitet wird. Ist beispielsweise eine Stickstoffquelle vorgesehen, so ist es möglich, zu Beginn des Regenerationszyklus für eine vorbestimmte Zeit reinen Stickstoff in die zu regenerieren Kohlendioxidadsorptionseinheiten einzuleiten. Ist die vorbestimmte Zeit verstrichen, so kann durch entsprechende Änderung der Zusammensetzung des Spülmediums mit einer anderen Regenerations- bzw. Reinigungseffizienz weiterregeneriert werden, beispielsweise mit einem Spülmedium basierend auf Luft mit reduziertem Kohlendioxidgehalt, welche von der anderen Kohlendioxidadsorptionseinheit erzeugt wurde und die entweder mit Stickstoff angereichert werden oder direkt zur weiteren Regenerierung der Kohlendioxidadsorptionseinheiten verwendet werden kann.

Die vorstehend beschriebenen unterschiedlichen Regenerierungsarten durch unterschiedliche Erzeugung von Signalen in der Eingangsgrößenbestimmungsvorrichtung können sinnvollerweise kombiniert werden. Beispielsweise ist es möglich, den Kohlendioxidgehalt eines bei der Regenerierung von einer Kohlendioxidadsorptionseinheit abgeführten Spülmediums kontinuierlich zu überwachen und anzupassen und zusätzlich vorzusehen, dass nach einer vorbestimmten Anzahl von Regenerationsvorgängen bzw. - zyklen eine Regenerierung mit reinem Stickstoff erfolgt. Weitere Kombinationsmöglichkeiten werden sich dem fachkundigen Leser ohne Weiteres erschließen.

Gemäß einem weiteren Aspekt der vorliegenden Erfindung ist ein Luftaufbereitungsverfahren geschaffen gemäß Anspruch 7.

Gemäß diesem Aspekt der vorliegenden Erfindung kann somit mit einer regenerierbaren Kohlendioxidadsorptionsvorrichtung Luft mit reduziertem Kohlendioxidgehalt erzeugt werden. Wie bereits vorstehend in Verbindung mit der Luftaufbereitungsvorrichtung beschrieben, kann die Kohlendioxidadsorptionsvorrichtung dabei zwei Kohlendioxidadsorptionseinheiten aufweisen, die wechselweise betrieben werden. Somit ist es möglich, dass eine Kohlendioxidadsorptionseinheit zur Produktion von Luft mit reduziertem Kohlendioxidgehalt eingesetzt wird, während die andere der beiden Kohlendioxidadsorptionseinheiten regeneriert wird. Die Regenerierung kann dabei im Gegenstromverfahren erfolgen. Um Luft mit reduziertem Kohlendioxidgehalt zu erzeugen, wird diese durch eine der Kohlendioxidadsorptionseinheiten geleitet. In den Kohlendioxidadsorptionseinheiten befindet sich ein Adsorptionsmittel, welches dazu in der Lage ist, Kohlendioxid zu adsorbieren. Am Ausgang der Kohlendioxidadsorptionseinheiten steht somit Luft mit reduziertem Kohlendioxidgehalt zur Verfügung, welche über eine Ausgangsleitung abgeleitet werden kann. Diese Luft mit reduziertem Kohlendioxidgehalt kann dann geeignet verwendet werden.

Gemäß diesem Aspekt ist die Kohlendioxidadsorptionsvorrichtung regenerierbar. Von einer Regenerierung wird dabei in diesem Zusammenhang dann gesprochen, wenn die Kohlendioxidadsorptionsvorrichtung zumindest teilweise regeneriert wird, um deren Betriebsfähigkeit kontinuierlich aufrecht zu erhalten. Kontinuierlich ist im vorliegenden Kontext so zu verstehen, dass keine wesentliche Unterbrechung bei der Erzeugung von Luft mit reduziertem Kohlendioxidgehalt auftritt. Eine kurze Unterbrechung der Erzeugung von Luft mit reduziertem Kohlendioxidgehalt kann auftreten, wenn zwischen zwei unterschiedlichen Kohlendioxidadsorptionseinheiten umgeschaltet wird, so dass die vorher zur Erzeugung von Luft mit reduziertem Kohlendioxidgehalt verwendete Kohlendioxidadsorptionseinheit in einen Zustand überführt wird, in dem diese regenerierbar ist, und die Kohlendioxidadsorptionseinheit, welche vorher regeneriert wurde, in einen Zustand gebracht wird, in der diese Luft mit reduziertem Kohlendioxidgehalt erzeugen kann. Eine solche Unterbrechung ist im vorliegenden Kontext als unwesentlich anzusehen. Zusätzlich könnte man bei Bedarf einen Luftausgleichsbehälter nachschalten, um unerwünschte Schwankungen zu reduzieren.

Im Regenerierungsschritt der Kohlendioxidadsorptionsvorrichtung wird ein Spülmedium verwendet, um beispielsweise das in einer Kohlendioxidadsorptionseinheit enthaltene Kohlendioxid zu regenerieren. Ein solches Spülmedium kann beispielsweise ein geeignetes Gas oder ein Gasgemisch sein, welches dazu in der Lage ist, dass in dem Kohlendioxidadsorptionsmittel aufgenommene Kohlendioxid herauszulösen und aus der Kohlendioxidadsorptionseinheiten abzuführen. Als Spülmedium kann beispielsweise Stickstoff oder Luft mit reduziertem Kohlendioxidgehalt verwendet werden.

Erfindungsgemäß kann die Zusammensetzung des Spülmediums basierend auf einer Eingangsgröße regelungstechnisch eingestellt werden. Die Zusammensetzung des Spülmediums ist somit veränderbar und an die Gegebenheiten anpassbar. Auf diese Weise ist es möglich, eine optimale Regenerierung der Kohlendioxidadsorptionsvorrichtung bzw. einer Kohlendioxidadsorptionseinheit der Kohlendioxidadsorptionsvorrichtung vorzunehmen. Eine regelungstechnische Einstellung soll im Kontext der vorliegenden Erfindung bedeuten, dass die Einstellung basierend auf einer bestimmten Eingangsgröße erfolgt. Eine solche Eingangsgröße kann messwertbasiert, zeitbasiert oder ereignisbasiert erzeugt werden. Anders gesagt kann die Eingangsgröße entweder direkt messtechnisch erfasst werden, beispielsweise durch einen Sensor, kann einem vorbestimmten Signal entsprechen, welches basierend auf einem bestimmten Ereignis abgegeben wird, oder kann diese auch rechnerisch ermittelt werden.

Da über die Zusammensetzung des Spülmediums eine optimale Regeneration der Kohlendioxidadsorptionseinheiten erreicht werden soll, bildet die Eingangsgröße vorzugsweise einen Regenerierungsgrad der Kohlendioxidadsorptionseinheiten ab. Der Regenerierungsgrad ist dabei ein direkter Hinweis darauf, mit welcher Qualität der Regenerierungsvorgang abläuft. Des Weiteren kann der Regenerierungsgrad Aufschluss über den aktuellen Regenerierungszustand geben, der beispielsweise angeben kann, ob eine weitere Regenerierung erforderlich ist oder nicht.

Vorzugsweise ist die Eingangsgröße ein Messwert, welcher bei der Regenerierung auf der strömabwärtigen Seite der Kohlendioxidadsorptionseinheiten erfasst wird. Beispielsweise kann auf der bei der Regenerierung stromabwärtigen Seite der Kohlendioxidadsorptionseinheiten der Kohlendioxidgehalt gemessen werden. Der Kohlendioxidgehalt in dem abgeleiteten Spülmedium kann dabei einen direkten Hinweis darauf geben, wie weit die Regenerierung in der Kohlendioxidadsorptionseinheit vorangeschritten ist. Beispielsweise kann ein geringer Kohlendioxidgehalt ein Hinweis darauf sein, dass der Großteil des Kohlendioxids, welches vorher in der Kohlendioxidadsorptionseinheit adsorbiert war, abgeführt wurde und die Kohlendioxideinheit damit einen hohen Regenerationsgrad aufweist. Ein hoher Kohlendioxidgehalt kann dabei ein Hinweis darauf sein, dass noch mehr gebundenes bzw. adsorbiertes Kohlendioxid in der Kohlendioxidadsorptionseinheit enthalten ist und eine weitere Regenerierung erforderlich ist.

Wie bereits vorstehend erwähnt wird als Spülmedium ein Gasgemisch verwendet werden. Als Basis für ein solches Gemisch wird Luft mit reduziertem Kohlendioxidgehalt verwendet, die von einer Kohlendioxidadsorptionseinheit in der Kohlendioxidadsorptionsvorrichtung erzeugt wurde. Anders gesagt wird ein Teil der erzeugten Luft mit reduziertem Kohlendioxidgehalt für die Regenerierung verwendet. Als weiteres Gas für die Herstellung des Gasgemisches bzw. des Spülmediums wird Stickstoff bereitgestellt. Dabei kann der Stickstoff beispielsweise durch einen Stickstoffbehälter oder auch einen Stickstoffgenerator bereitgestellt werden. Eine Einstelleinrichtung kann dann dazu verwendet werden, um aus den vorhandenen Gasen bzw. Gasgemisches die Zusammensetzung des Spülmediums basierend auf der Eingangsgröße regelungstechnisch einzustellen. Dabei wird insbesondere auf der Grundlage der Eingangsgröße ein optimales Mischungsverhältnis bestimmt und über entsprechende Ventile so viel Gas bzw. Gasgemisch zugeführt, dass die gewünschte Zusammensetzung des Spülmediums erhalten wird. Durch eine derartige Einstellung der Zusammensetzung des Spülmediums basierend auf einer Eingangsgröße kann somit stets eine optimale Zusammensetzung des Spülmediums für die Regenerierung einer Kohlendioxidadsorptionseinheit verwendet werden.

Beispielsweise kann für die Regenerierung Luft mit reduziertem Kohlendioxidgehalt verwendet werden, ohne dieser ein weiteres Gas zuzugeben. Vorteilhaft an dieser Ausgestaltung ist, dass das für die Regenerierung verwendbare Gasgemisch in der Kohlendioxidadsorptionsvorrichtung selbst erzeugt wird und für die Regenerierung eingesetzt werden kann. Zeigt sich jedoch, dass die Regenerierung mit Luft mit reduziertem Kohlendioxidgehalt nicht in ausreichendem Ausmaß erfolgen kann, was beispielsweise durch einen Sensor oder anderweitig ermittelt werden kann, so ist es möglich, während der Regenerierung oder auch zwischen einzelnen Regenerierungszyklen die Zusammensetzung des Spülmediums zu ändern, indem beispielsweise der Luft mit reduziertem Kohlendioxidgehalt ein weiteres Gas, beispielsweise Stickstoff, zugeführt wird. Auf diese Weise kann ein erhöhter Stickstoffgehalt erzeugt werden, welcher die Regenerierung der Kohlendioxidadsorptionseinheiten begünstigt. Auch ist es möglich, die Zusammensetzung des Spülmediums im zeitlichen Verlauf zu verändern. So ist es beispielsweise möglich, innerhalb eines Regenerierungszyklus zunächst mit Luft mit reduziertem Kohlendioxidgehalt zu regenerieren und erst zu einem späteren Zeitpunkt den Stickstoffgehalt in dieser Luft mit reduziertem Kohlendioxidgehalt zusätzlich durch Zugabe von reinem Stickstoff zu erhöhen.

Alternativ kann jedoch auch mehrere Zyklen lang mit Luft mit reduziertem Kohlendioxidgehalt regeneriert werden und nach einer vorbestimmten Anzahl solcher Regenerierungszyklen ein oder mehrere Regenerierungszyklen mit reinem Stickstoff vorgesehen werden. Selbstverständlich ist es auch möglich, eine Regenerierung mit Luft mit reduziertem Kohlendioxidgehalt vorzunehmen und messtechnisch zu ermitteln, ob ein ausreichender Regenerierungsgrad einer Kohlendioxidadsorptionseinheiten durch Regenerierung mit Luft mit reduziertem Kohlendioxidgehalt erreicht werden kann. Es ist denkbar, dass eine Regenerierung mit Luft mit reduziertem Kohlendioxidgehalt dazu führen kann, dass die ursprüngliche Leistungsfähigkeit der Kohlendioxidadsorptionseinheiten nicht ausreichend hergestellt werden kann. Es kann demnach vorkommen, dass sich bei jedem Regenerierungszyklus, bei dem Luft mit reduziertem Kohlendioxidgehalt verwendet wird, keine ausreichende Regenerierung der Kohlendioxidadsorptionseinheiten erzielen lässt. Auf diese Weise kann sich die Regenerationsfähigkeit bzw. Regenerationsleistung der Kohlendioxidadsorptionseinheit etwas gegenüber dem vorherigen Zyklus verschlechtern. Um für einen Ausgleich zu sorgen, können daher dann, wenn messtechnisch erfasst wird, dass sich die Adsorptionsleistungsfähigkeit einer mit Luft mit reduziertem Kohlendioxidgehalt regenerierten Kohlendioxidadsorptionseinheit verschlechtert hat, ein oder mehrere Regenerierungszyklen vorgesehen werden, bei denen ein Spülmedium mit stark erhöhten Regenerierungsfähigkeiten verwendet wird. Beispielsweise kann reiner Stickstoff verwendet werden.

Es ist jedoch auch möglich, die Zusammensetzung des Spülmediums getaktet zu ändern, beispielsweise so, dass nach neun Zyklen Regenerierung mit Luft mit reduziertem Kohlendioxidgehalt bei einem Zyklus reiner Stickstoff verwendet wird. Unterschiedliche Regelungsarten sind dabei möglich. Beispielsweise ist es möglich, eine lineare Regelung zu verwenden, bei der der Gehalt an Stickstoff in der Zusammensetzung des Spülmediums für jeden Zyklus eingestellt wird. Insgesamt kann beispielsweise die Stickstoffkonzentration des Spülmediums so eingeregelt werden, dass eine optimale Regeneration der Kohlendioxidadsorptionseinheiten erfolgt.

Gemäß einer bevorzugten Ausführungsform der vorliegenden Erfindung kann als Spülmedium zumindest ein Teil der erzeugten Luft mit reduziertem Kohlendioxidgehalt verwendet werden und kann eine Stickstoffkonzentration im Spülmedium durch Zugabe von Stickstoff so angepasst werden, dass eine optimale Regeneration erfolgt. Die Stickstoffkonzentration kann bei dieser Ausführungsform somit bedarfsweise erhöht werden.

Gemäß einer weiteren bevorzugten Ausführungsform wird der Innendruck der Kohlendioxidadsorptionseinheiten ermittelt und wird der Innendruck auf einen Sollinnendruck erhöht, wenn ermittelt wird, dass ein vorbestimmter Druck unterschritten wurde. Dieses Verfahren wird vorteilhafter Weise dann ausgeführt, wenn keine Luft mit reduziertem Kohlendioxidgehalt erzeugt wird und keine Regenerierung der Kohlendioxidadsorptionsvorrichtung stattfindet. Genauer gesagt kann das Luftaufbereitungsverfahren gemäß dieser bevorzugten Ausführungsform zunächst ermitteln, ob eine Erzeugung von Luft mit reduziertem Kohlendioxidgehalt stattfindet oder nicht. Wird festgestellt, dass keine Erzeugung von Luft mit reduziertem Kohlendioxidgehalt stattfindet, beispielsweise weil die Luftaufbereitungsvorrichtung, die mit dem vorliegenden Luftaufbereitungsverfahren betrieben wird, in einen Zustand gebracht ist, bei dem sie außer Betrieb gesetzt ist, dann kann das Luftaufbereitungsverfahren kontinuierlich den Innendruck der Kohlendioxidadsorptionseinheiten überwachen. Wird festgestellt, dass ein vorbestimmter Druck unterschritten wird, werden die Kohlendioxidadsorptionseinheiten durch geeignete Mittel unter Druck gesetzt bzw. wird der Innendruck auf einen Sollinnendruck erhöht. Zu diesem Zweck können beispielsweise Kompressoren bzw. Verdichter vorgesehen sein, die bedarfsweise in Betrieb gesetzt werden. Indem in den Kohlendioxidadsorptionseinheiten stets der vorbestimmte Druck gehalten wird, kann vermieden werden, dass Feuchte bei Stillstandszeiten der Luftaufbereitungsvorrichtung in die Kohlendioxidadsorptionseinheiten eintreten kann.

### KURZBESCHREIBUNG DER ZEICHNUNGEN

Nachfolgend werden Ausführungsbeispiele der Erfindung unter Bezugnahme auf die beigefügten Figuren beschrieben.
Figur 1 zeigt schematisch eine Luftaufbereitungsvorrichtung gemäß einem ersten Ausführungsbeispiel der vorliegenden Erfindung.
Figur 2 zeigt schematisch eine weitere Ausführungsform einer Luftaufbereitungsvorrichtung gemäß einem weiteren Ausführungsbeispiel der vorliegenden Erfindung.
Figur 3 zeigt schematisch eine weitere Ausführungsform einer Luftaufbereitungsvorrichtung gemäß der vorliegenden Erfindung.

Es ist zu beachten, dass in den Figuren gleiche Bezugszeichen verwendet wurden, um gleiche oder ähnliche Elemente zu kennzeichnen.

### DETAILLIERTE BESCHREIBUNG VON AUSFÜHRUNGSBEISPIELEN

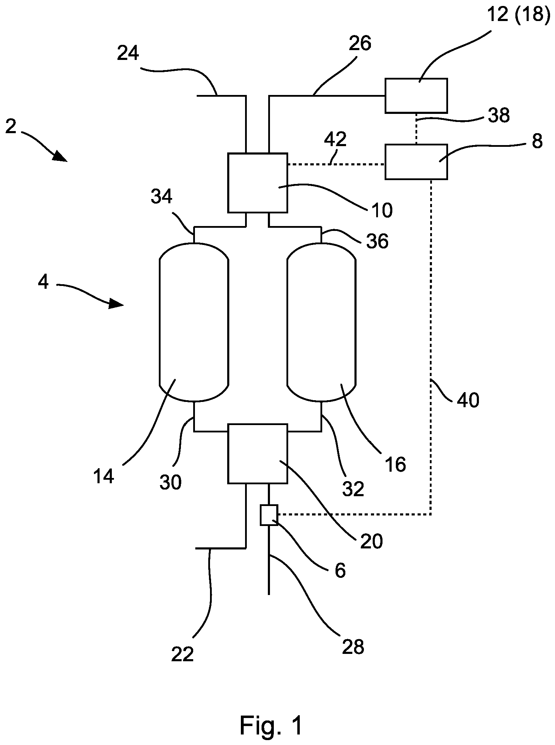

Figur 1 zeigt schematisch eine Luftaufbereitungsvorrichtung gemäß einem ersten Ausführungsbeispiel der vorliegenden Erfindung.

Die Luftaufbereitungsvorrichtung 2 hat einen Einlass 22 für Umgebungsluft. Die Umgebungsluft kann beispielsweise mit einem nicht dargestellten Gebläse in den Einlass 22 eingeleitet werden. Der Einlass 22 ist über eine zweite Einstelleinrichtung 20 mit einer Kohlendioxidadsorptionsvorrichtung 4 verbunden, die dazu in der Lage ist, den Kohlendioxidgehalt der zugeführten Umgebungsluft zu reduzieren.

Die Kohlendioxidadsorptionsvorrichtung 4 weist eine erste Kohlendioxidadsorptionseinheit 14 und eine zweite Kohlendioxidadsorptionseinheit 16 auf, die mit der zweiten Einstelleinrichtung 20 über zwei Leitungen 30, 32 verbunden sind. Stromabwärts der Kohlendioxidadsorptionseinheiten 14, 16 sind diese über Leitungen 34, 36 mit einer ersten Einstelleinrichtung 10 verbunden. Die erste Einstelleinrichtung 10 ist mit einem Auslass 24 verbunden, über den Luft mit reduziertem Kohlendioxidgehalt ausgegeben wird. Ferner mündet in die erste Einstelleinrichtung 10 eine Leitung 26, die mit einer Stickstoffquelle 12 bzw. 18 verbunden ist. Die Luftaufbereitungsvorrichtung 2 weist ferner eine Eingangsgrößenbestimmungsvorrichtung 6 auf, die im vorliegenden Ausführungsbeispiel an einem Auslass 28 angeordnet ist, über den im Falle eines Regenerierens der Kohlendioxidadsorptionsvorrichtung 4 das Spülmedium aus dem System abgeführt werden kann. Der Auslass 28 ist mit der zweiten Einstelleinrichtung 20 verbunden und kann durch diese wahlweise mit einer von beiden Kohlendioxidadsorptionseinheiten 14, 16 verbunden werden.

Ferner weist die Luftaufbereitungsvorrichtung 2 eine Regelungseinrichtung 8 auf, die über Signalleitungen 38, 40, 42 mit der Stickstoffquelle 12, 18, der ersten Einstelleinrichtung 10 und der Eingangsgrößenbestimmungsvorrichtung 6 verbunden ist.

Die Einstelleinrichtungen 10, 20 sind dazu in der Lage, die in diese mündenden Leitungen wahlweise geeignet miteinander zu verbinden. Wie bereits vorstehend beschrieben, ist die erste Einstelleinrichtung 10 mit den Leitungen 34, 36 der Kohlendioxidadsorptionseinheiten 14, 16 verbunden sowie mit dem Auslass 24 und der Stickstoffleitung 26. Die Einstelleinrichtung 10 ist dazu in der Lage, mehrere Verbindungszustände zwischen den einzelnen Leitungen herzustellen. Dabei ist die Einstelleinrichtung 10 darüber hinaus in der Lage auch die Fluidströmung durch die einzelnen Leitungen zu verändern, wobei beispielsweise die Durchflussmenge festgelegt werden kann. Die zweite Einstelleinrichtung 20 kann ein Wegeventilmechanismus sein, der es zumindest ermöglicht, bei einer Betriebsart den Einlass 22 mit einer der Leitungen 30, 32 zu verbinden und die andere Leitung von den Leitungen 32, 30 gleichzeitig mit dem Auslass 28 zu verbinden. Des Weiteren kann die zweite Einstelleinrichtung 20 einen Zustand einnehmen, bei dem die Leitungen 30, 32 verschlossen sind. In diesem Fall ist keine Fluidströmung durch die zweite Einstelleinrichtung 20 in die Leitungen 30, 32 möglich. Somit sind durch die zweite Einstelleinrichtung 20 drei Betriebspositionen möglich. In einer ersten Betriebsposition ist der Einlass 22 mit der Leitung 30 verbunden, wodurch Luft in die erste Kohlendioxidadsorptionseinheit 14 einströmen kann. Gleichzeitig ist bei dieser ersten Betriebsart der Auslass 28 mit der Leitung 32 verbunden, sodass ein aus der zweiten Kohlendioxidadsorptionseinheit 16 austretendes Spülmedium durch die Leitung 32 in den Auslass 28 geleitet werden kann. Eine zweite Betriebsart der zweiten Einstelleinrichtung 20 sieht eine umgekehrte Schaltung vor, nämlich, dass der Einlass 22 mit der Leitung 32 verbunden ist und der Auslass 28 mit der Leitung 30 verbunden ist. Auf diese Weise kann Luft über den Einlass 22 und die Leitung 32 in die zweite Kohlendioxidadsorptionseinheit 16 eingeleitet werden, wohingegen ein Spülmedium, welches im Gegenstrom in die erste Kohlendioxidadsorptionseinheit 14 eingeleitet wird, über die Leitungen 30 und den Auslass 28 in die Umgebung abgeleitet werden kann. Die dritte Betriebsart der Einstelleinrichtung 20 sperrt die Leitungen 30, 32. Diese dritte Betriebsart kann beispielsweise beim Stillstand der Luftaufbereitungsvorrichtung 2 verwendet werden, um zu verhindern, dass die Kohlendioxidadsorptionseinheiten 14, 16 mit dem Einlass oder dem Auslass verbunden sind, um einem Eindringen von Feuchte in die Kohlendioxidadsorptionseinheiten 14, 16 vorzubeugen.

Die erste Einstelleinrichtung 10 ist ebenfalls dazu in der Lage, entsprechende Betriebszustände einzunehmen. In einem ersten Betriebszustand ist die Leitung 34 der ersten Kohlendioxidadsorptionseinheit 14 mit dem Auslass 24 verbunden, so das in der ersten Kohlendioxidadsorptionseinheit 14 erzeugte Luft mit reduziertem Kohlendioxidgehalt über den Auslass 24 abgeführt werden kann. Bei diesem ersten Betriebszustand ist die erste Einstelleinrichtung 10 dazu in der Lage, einen Teil der aus der ersten Kohlendioxidadsorptionseinheit 14 ausströmenden Luft mit reduziertem Kohlendioxidgehalt zu Regenerationszwecken über die Leitung 36 in die zweite Kohlendioxidadsorptionseinheit 16 einzuleiten. Ein Teil der in der ersten Kohlendioxidadsorptionseinheit 14 erzeugten Luft mit reduziertem Kohlendioxidgehalt wird demnach unmittelbar für die Regenerierung der zweiten Kohlendioxidadsorptionseinheit 16 verwendet.

Wie bereits vorstehend dargelegt, ist eine Stickstoffquelle 12, 18 über eine Leitung 26 mit der Einstelleinrichtung 10 verbunden. Die erste Einstelleinrichtung 10 ist dazu in der Lage, der Luft mit reduziertem Kohlendioxidgehalt, welche für die Regenerierung der zweiten Kohlendioxidadsorptionseinheiten 16 verwendet werden soll, einen Anteil Stickstoff beizumengen, um die Regenerationseigenschaft des Spülmediums zu verbessern.

Die Zusammensetzung des Spülmediums, welches durch die erste Einstelleinrichtung 10 bereitgestellt wird, wird durch die Regelungseinrichtung 8 bestimmt. Genauer gesagt ist die Regelungseinrichtung 8 dazu in der Lage, ein Signal, welches eine Eingangsgröße darstellt, von einer Eingangsgrößenbestimmungsvorrichtung 6 über eine Signalleitung 40 zu empfangen und auf der Grundlage dieses Signals, also basierend auf der Eingangsgröße, die gewünschte Zusammensetzung des Spülmediums zu bestimmen. Die Regelungseinrichtung 8 gibt dann ein Signal an die erste Einstelleinrichtung 10 über eine Leitung 42 aus und gegebenenfalls ein Signal an die Stickstoffquelle 12, 18 über eine Signalleitung 38. Die erste Einstelleinrichtung 10 dient somit als Stellglied.

Der Betrieb der Luftaufbereitungsvorrichtung 2 wird nachfolgend beschrieben. Die Luftaufbereitungsvorrichtung 2 befindet sich zunächst in einem Zustand, in der die erste Kohlendioxidadsorptionseinheit 14 Kohlendioxid adsorbiert und somit Luft mit reduziertem Kohlendioxidgehalt ausgibt. Die zweite Kohlendioxidadsorptionseinheit 16 wird gleichzeitig durch Zuführen eines Spülmediums regeneriert. Zu diesem Zweck verbindet die erste Einstelleinrichtung 10 einerseits die Leitung 34 mit dem Auslass 24. Auf diese Weise kann Luft mit reduziertem Kohlendioxidgehalt, welche in der ersten Kohlendioxidadsorptionseinheit 14 erzeugt wurde, über den Auslass 24 in eine nachgeordnete Vorrichtung ausgegeben werden bzw. aus dem Auslass 24 entnommen werden. Die zweite Einstelleinrichtung 20 verbindet den Einlass 22 mit der Leitung 30, so dass in die Leitung 22 eingeführte druckbeaufschlagte Luft in die erste Kohlendioxidadsorptionseinheiten 14 gelangen kann. Des Weiteren verbindet die zweite Einstelleinrichtung 20 die Leitung 32 mit dem Auslass 28, so dass ein Spülmedium, welches zur Regenerierung der zweiten Kohlendioxidadsorptionseinheit 16 verwendet wird, über die Leitung 32 und den Auslass 28 in die Umgebung abgeführt werden kann. Zur Bereitstellung des Spülmediums wird die erste Einstelleinrichtung 10 von der Regelungseinrichtung 8 angesteuert, um ein Spülmedium mit einer bestimmten Zusammensetzung bereitzustellen und über die Leitung 36 in die zweite Kohlendioxidadsorptionseinheit 16 einzuleiten. Die Luftaufbereitungsvorrichtung 2 gemäß dem vorliegenden Ausführungsbeispiel kann dabei so betrieben werden, dass beispielsweise für die Regenerierung der zweiten Kohlendioxidadsorptionseinheit 16 zunächst Luft mit reduziertem Kohlendioxidgehalt, welche von der ersten Kohlendioxidadsorptionseinheiten 14 erzeugt wurde, zu verwenden, um die zweite Kohlendioxidadsorptionseinheiten 16 zu regenerieren. Zu diesem Zweck schafft die erste Einstelleinrichtung 10 eine Verbindung, bei der eine Teilströmung aus der von der Leitung 34 erhaltenen Luft mit reduziertem Kohlendioxidgehalt entnommen wird und über die Leitung 36 der zweiten Kohlendioxidadsorptionseinheit 16 zugeführt wird.

Im Auslass 28 ist eine Eingangsgrößenbestimmungsvorrichtung 6 in Form eines Kohlendioxidsensors vorgesehen, der den Kohlendioxidgehalt in dem Spülmedium nach Austritt aus der zweiten Kohlendioxidadsorptionseinheiten 16 misst. Da das verwendete Spülmedium, im vorliegenden Fall zunächst Luft mit reduziertem Kohlendioxidgehalt, dazu in der Lage ist, dass in der zweiten Kohlendioxidadsorptionseinheiten 16 gebundene Kohlendioxid zu lösen und über die Leitung 32 abzuleiten, ändert sich der Kohlendioxidgehalt im Auslass 28 abhängig von der Menge an Kohlendioxid, die aus der zweiten Kohlendioxidadsorptionseinheit 16 gelöst wird. Der mit dem Sensor 6 erfasste Kohlendioxidgehalt wird über eine Signalleitung 40 an die Regelungseinrichtung 8 übergeben, welche auf der Grundlage dieser Eingangsgröße bestimmen kann, ob die Regenerierung zufriedenstellend bzw. optimal verläuft. Wird in der Regelungseinrichtung 8 festgestellt, dass beispielsweise der mit dem Sensor 6 erfasste Wert einen vorbestimmten Wert übersteigt, so kann die Regelungseinrichtung ein Signal über die Leitung 42 an die erste Einstelleinrichtung 10 ausgeben, um die Zusammensetzung des Spülmediums zu verändern. Genauer gesagt kann die Regelungseinrichtung 8 feststellen, dass zur Erzielung einer optimalen Regeneration der zweiten Kohlendioxidadsorptionseinheiten 16 ein Spülmedium mit höherer Reinigungseffizienz verwendet werden muss. Bei dem vorliegenden Ausführungsbeispiel kann die Regelungseinrichtung 8 daher ein Signal über eine Leitung 38 an eine Stickstoffquelle 12 bzw. 18 ausgegeben, damit diese Stickstoffquelle 12 bzw. 18 im wesentlichen reinen Stickstoff bereitstellt. Gleichzeitig kann die Regelungseinrichtung 8 ein Signal über die Leitung 42 an die erste Einstelleinrichtung 10 ausgeben, welches Informationen über die erforderliche Zusammensetzung des Spülmediums enthält. Auf der Grundlage des von der Regelungseinrichtung 8 erhaltenen Signals kann die erste Einstelleinrichtung 10 nun die Zusammensetzung des Spülmediums so verändern, dass die Regenerierungseffizienz in der zweiten Kohlendioxidadsorptionseinheit 16 verbessert wird. Bei dem vorliegenden Ausführungsbeispiel erhöht die erste Einstelleinrichtung 10 dazu den Stickstoffgehalt des Spülmediums indem sie dem Teilstrom von Luft mit reduziertem Kohlendioxidgehalt eine vorbestimmte Menge Stickstoff, der über die Leitung 26 bereitgestellt wird, beimengt. Dieses Spülmedium in der neuen Zusammensetzung wird dann über die Leitung 36 ausgegeben. Auf diese Weise ist die Luftaufbereitungsvorrichtung 2 so angepasst, dass eine optimale Regenerierung einer Kohlendioxidadsorptionseinheit möglich ist.

Es ist zu beachten, dass die erste Einstelleinrichtung 10 und die zweite Einstelleinrichtung 20 dazu in der Lage sind, die Fluidströme so umzuleiten, dass die erste Kohlendioxidadsorptionseinheit 14 und die zweite Kohlendioxidadsorptionseinheit 16 im Wechsel betrieben werden können und gleichzeitig die andere von den beiden Kohlendioxidadsorptionseinheiten 14, 16 regeneriert werden kann. Es kann also in dem Fall, dass die erste Kohlendioxidadsorptionseinheit 14 regeneriert wird, die erste Einstelleinrichtung ein geeignetes Spülmedium in der vorstehend beschriebenen Art und Weise für die Regenerierung bereitstellen.

Obwohl in Figur 1 nicht dargestellt, können die Kohlendioxidadsorptionseinheiten 14 und 16 mit einer Heizeinrichtung versehen sein, welche zur Unterstützung des Regenerierungsprozesses Wärme erzeugen kann. Eine solche Heizeinrichtung wird nachfolgend in Bezug auf ein weiteres Ausführungsbeispiel der vorliegenden Erfindung beschrieben werden und ist bei dem Ausfiihrungsbeispiel von Figur 1 gleichermaßen anwendbar. Des Weiteren ist es möglich, in der Kohlendioxidadsorptionseinheit, welche regeneriert wird, einen Unterdruck zu erzeugen, indem beispielsweise im Auslass 28 ein Gebläse vorgesehen ist, welches einen solchen Unterdruck erzeugen kann. Ein solcher Unterdruck kann die Regeneration in den Kohlendioxidadsorptionseinheiten zusätzlich verbessern und kann optional zusätzlich erzeugt werden.

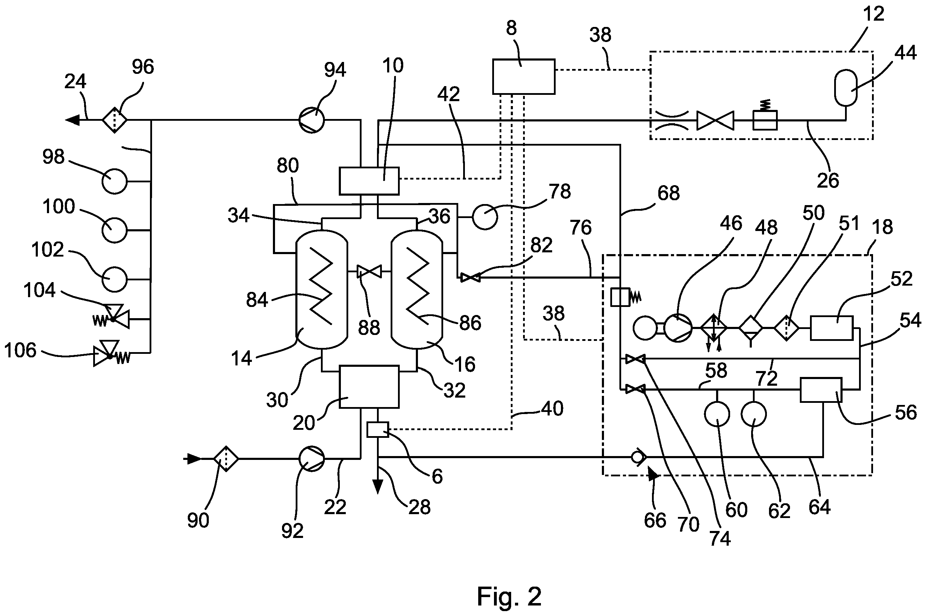

Ein weiteres Ausführungsbeispiel der vorliegenden Erfindung ist in Figur 2 gezeigt. Die Luftaufbereitungsvorrichtung in Figur 2 enthält größtenteils dieselben Elemente, wie sie auch in der in Figur 1 gezeigten Luftaufbereitungsvorrichtung 2 gezeigt sind. Diese Elemente sind mit identischen Bezugszeichen gekennzeichnet.

In Figur 2 sind unterschiedliche Arten von Stickstoffquellen gezeigt. Diese Stickstoffquellen 12, 18 können alternativ oder in Kombination verwendet werden und dienen beide der Bereitstellung von im Wesentlichen reinem Stickstoff. Dieser kann dann, wie vorstehend beschrieben, als Spülmedium verwendet werden oder zur Erhöhung des Stickstoffgehalts eines Spülmediums verwendet werden.

Bei der Stickstoffquelle 12 handelt es sich im Wesentlichen um einen Stickstoffbehälter 44, der über die Leitung 26 mit der ersten Einstelleinrichtung 10 verbunden ist. Wie es Figur 2 ebenfalls zu entnehmen ist, können in der Leitung 26 weitere Elemente angeordnet sein, um den aus dem Behälter 44 ausströmenden Stickstoff in einer geeigneten Menge und mit einem geeigneten Druck bereitzustellen. Diese Elemente, die hier nicht näher beschrieben werden sollen, können über die Signalleitung 38 mit der Regelungseinrichtung 8 verbunden sein, und können das Gas auf der Grundlage eines von der Regelungseinrichtung 8 erhaltenen Signals entsprechend einstellen.

Mit Bezugszeichen 18 ist eine zweite Stickstoffquelle gekennzeichnet, bei der es sich um einen Stickstoff-Generator handelt. Im Gegensatz zu dem Behälter 44 der Stickstoffquelle 12 verwendet der Stickstoff-Generator 18 keinen gespeicherten Stickstoff sondern erzeugt den Stickstoff selbst. Zu diesem Zweck weist der Stickstoff-Generator 18 eine Abfolge von Elementen auf, welche dazu in der Lage sind, druckbeaufschlagte und getrocknete Luft bereitzustellen. Diese Elemente umfassen beispielsweise einen motorbetriebenen Verdichter 46, einen Kühler 48, einen Kondensatabscheider 50, einen Luftfilter 51 und einen Trockner 52. Diese Elemente sind in Abfolge angeordnet und Umgebungsluft, welche über den Verdichter 46 in das System eingeführt wird, steht am Ende des Trockners 52 als getrocknete verdichtete Luft in der Leitung 54 zur Verfügung. Diese getrocknete Druckluft kann über die Leitung 54 in eine Trenneinrichtung 56, welche eine Stickstoffmembran aufweist, eingeleitet werden. In der Trenneinrichtung 56 wird der Stickstoff aus der druckbeaufschlagten und getrockneten Luft abgetrennt und über eine Leitung 58 ausgegeben. Zur Überwachung des aus der Trenneinrichtung 56 abgegebenen Fluidstroms mit hohem Stickstoffanteil kann in der Leitung 58 eine Druckmesseinrichtung 60 und ein Stickstoffsensor 62 vorgesehen sein. Das in der Trenneinrichtung 56 separierte Gas, in welchem im wesentlichen kein Stickstoff mehr enthalten ist, wird über eine Leitung 64 an die Umgebung abgegeben. Im vorliegenden Ausführungsbeispiel gemäß Figur 2 ist die Leitung 64 zu diesem Zweck mit dem Auslass 28 verbunden. Um zu verhindern, dass über die Leitung 64 ein Fluid aus der falschen Richtung in die Trenneinrichtung 56 eindringen kann, ist ein Rückschlagventil 66 in der Leitung 64 angeordnet. Auf diese Weise wird in Leitung 58 ein Fluid mit sehr hohem Stickstoffanteil beispielsweise im Bereich von 85-95 %, bereitgestellt. Auch eine solche Stickstoffkonzentration soll im Kontext der vorliegenden Erfindung als im wesentlichen reiner Stickstoff angesehen werden. Die Leitung 58 ist über ein Ventil 70 mit einer weiteren Leitung 68 verbunden, die mit der ersten Einstelleinrichtung 10 fluidverbunden ist. Je nach Betätigung des Ventils 70 kann somit von dem Stickstoff-Generator 18 erzeugter Stickstoff in die erste Einstelleinrichtung 10 abgegeben werden. Wie es auch aus Figur 2 ersichtlich ist, weist der Stickstoff-Generator 18 eine zusätzliche Leitung 72 auf, welche den Auslass des Trockners 52, insbesondere Leitung 54, über ein Ventil 74 direkt mit Leitung 68 verbindet. Auf diese Weise kann bei Bedarf getrocknete Druckluft aus dem Stickstoff-Generator 18 abgeführt werden. Diese Druckluft steht dann im System zur Verfügung und kann zu anderen Zwecken verwendet werden. Der Stickstoff-Generator 18 ist über eine Signalleitung 38 mit der Regelungseinrichtung 8 verbunden und kann von der Regelungseinrichtung 8 bei Bedarf angesteuert werden, um Stickstoff zu produzieren.

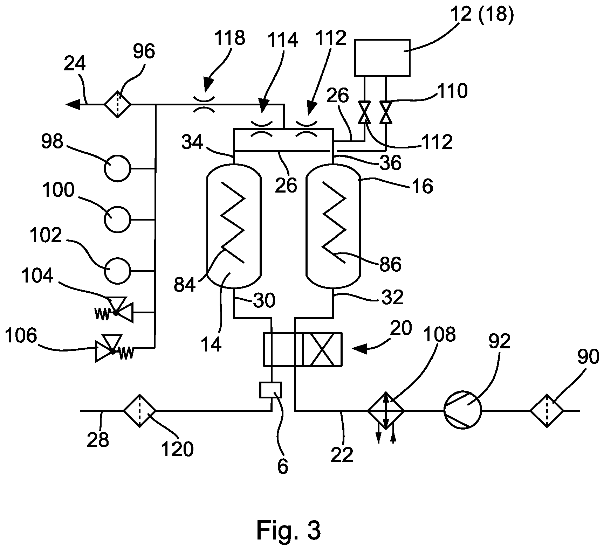

Eine weitere Funktion der Luftreinigungsvorrichtung des vorliegenden Ausführungsbeispiels gemäß Figur 2 wird nachfolgend beschrieben. Die Anordnung gemäß Figur 2 weist zusätzlich eine Drucküberwachung 78 auf, die über eine Leitung 80 mit den Kohlendioxidadsorptionseinheiten 14, 16 verbunden ist und auf diese Weise den Innendruck von beiden Kohlendioxidadsorptionseinheiten 14, 16 überwachen kann. Die Leitung 80 ist über ein Ventil 82 mit einer Leitung 76 verbunden, die mit einem Ausgang des Stickstoff-Generators 18 verbunden ist. Befindet sich die Luftaufbereitungsvorrichtung 2 im Stillstand bzw. ist diese außer Betrieb gesetzt, so können die erste Einstelleinrichtung 10 und die zweite Einstelleinrichtung 20 bewirken, dass die Kohlendioxidadsorptionseinheiten 14, 16 nicht mit anderen Elementen oder der Umgebung verbunden sind. Genauer gesagt können die erste Einstelleinrichtung 10 und die zweite Einstelleinrichtung 20 die Leitungen 34, 36, 30, 32 versperren. Auf diese Weise soll verhindert werden, das während des Stillstands der Luftaufbereitungsvorrichtung 2 Feuchtigkeit aus der Umgebung in die Kohlendioxidadsorptionseinheiten 14, 16 eindringen kann. Um ein solches Eindringen von Feuchtigkeit zu vermeiden, kann den Kohlendioxidadsorptionseinheiten 14, 16 über die Leitung 80 bei entsprechender Schaltung des Ventils 82 und Betrieb des Stickstoff-Generators 18 Druckluft zugeführt werden. Zu diesem Zweck werden in dem Stickstoff-Generator 18 die Ventile 70 und 74 so geschaltet, dass trockene Druckluft über die Leitung 72, die Leitung 68, die Leitung 76 und über die Leitung 80 in die beiden Kohlendioxidadsorptionseinheiten 14, 16 eingeleitet werden kann. Dies kann so lange geschehen, bis die Drucküberwachung 78 feststellt, dass ein vorbestimmter Druck im Inneren der beiden Kohlendioxidadsorptionseinheiten 14, 16 erreicht ist. Ist dies der Fall, so kann Ventil 82 geschlossen werden und die Erzeugung von Druckluft in dem Stickstoff-Generator 18 eingestellt werden. In diesem Zusammenhang ist zu erwähnen, dass zur Erzeugung der Druckluft nicht zwangsläufig ein Stickstoff-Generator 18 verwendet werden muss. Vielmehr kann jegliche andere Art von Druckluftbereitstellung verwendet werden, die für den angegebenen Zweck ausreichend ist. Wünschenswerterweise werden die Kohlendioxidadsorptionseinheiten 14, 16 so unter Druck gesetzt, dass der Innendruck 0,1 bar über dem Umgebungsdruck liegt. Auf diese Weise kann verhindert werden, dass bei etwaigen Undichtigkeiten Luft aus der Umgebung in die Kohlendioxidadsorptionseinheiten 14, 16 eindringen kann. Die Drucküberwachung 78 kann dabei den Innendruck der Kohlendioxidadsorptionseinheiten 14, 16 kontinuierlich überwachen. Stellt diese fest, dass der Innendruck einen vorgegebenen Druck unterschreitet, so kann den Kohlendioxidadsorptionseinheiten 14,16 in der vorstehend beschriebenen Art und Weise Druckluft zugeführt werden, bis der gewünschte Innendruck wiederhergestellt ist. Die hier beschriebene Drucküberwachung kann auch bei den in den Figuren 1 und 3 beschriebenen Ausführungsformen eingesetzt werden, obwohl diese dort nicht gezeigt ist.

Die beiden Kohlendioxidadsorptionseinheiten 14, 16 können über ein Ventil 88 miteinander verbunden sein. Dieses Ventil 88 kann bei einem Umschaltvorgang zwischen den einzelnen Kohlendioxidadsorptionseinheiten 14, 16 von einem Zustand, in dem die Kohlendioxidadsorptionseinheiten adsorbiert, und einem Zustand, in dem die Kohlendioxidadsorptionseinheiten regeneriert wird, verwendet werden. Genauer gesagt wird das Ventil 88 verwendet, um einen Druckausgleich zwischen beiden Kohlendioxidadsorptionseinheiten 14, 16 herbeizuführen, der für einen solchen Umschaltvorgang vorteilhaft ist.

Ferner ist in Figur 2 gezeigt, dass die Kohlendioxidadsorptionseinheiten 14, 16 Heizeinrichtungen 84, 86 aufweisen, die, obwohl sie in Figur 2 dargestellt sind, lediglich optional sind. Die Heizeinrichtungen 84, 86 können bei der Regenerierung der jeweiligen Kohlendioxidadsorptionseinheiten 14, 16 verwendet werden, um die Innentemperatur in den Kohlendioxidadsorptionseinheiten 14, 16 zu erhöhen. Auf diese Weise wird die Regenerierungseffizienz in der zu regenerieren den Kohlendioxidadsorptionseinheiten verbessert. Diese Heizeinrichtungen können ebenfalls durch die Regelungseinrichtung angesteuert werden, wenn beispielsweise bestimmt wird, dass die Regenerierungseffizienz verbessert werden muss. Die Heizeinrichtungen können dabei zusätzlich zu einem Spülmedium mit erhöhtem Stickstoffgehalt, welches von der Einstelleinrichtung 10 bereitgestellt wird, verwendet werden. Alternativ oder zusätzlich können auch Heizeinrichtungen verwendet werden, die das Spülmedium bereits vor dem Eintritt in die jeweilige Kohlendioxidadsorptionseinheit erwärmen.

Bei dem in Figur 2 gezeigten Ausfiihrungsbeispiel sind am Einlass 22 ferner ein Luftfilter 90 und ein Gebläse 92 vorgesehen, durch die Luft aus der Umgebung in die jeweiligen Kohlendioxidadsorptionseinheiten befördert werden kann. Im Auslass 24 der Luftaufbereitungsvorrichtung 2 kann sich optional ein weiteres Gebläse 94 befinden, welches die Fluidströmung zusätzlich unterstützen kann. Des Weiteren kann im Auslass 24 ein Luftfilter 96 vorgesehene sein, um etwaige Verunreinigungen, beispielsweise Spuren des in den Kohlendioxidadsorptionseinheiten enthaltenen Kohlendioxidadsorptionsmittels, zu entfernen. Darüber hinaus kann am Auslass 24 optional eine Überwachung vorgesehen sein, welche beispielsweise eine Druckerfassung 98, einen Sauerstoffsensor 100, einen Kohlendioxidsensor 102, ein Überdrucksicherheitsventil 104 und ein Unterdrucksicherheitsventil 106 aufweist. Insbesondere die Druckerfassung 98 und die Sensoren 100, 102 können zur Steuerung der Luftaufbereitungsvorrichtung dienen. Beispielsweise kann der Kohlendioxidsensor 102 feststellen, ob sich die Adsorptionsfähigkeit einer Kohlendioxidadsorptionseinheit 2 verschlechtert hat und eine Regenerierung von dieser erforderlich ist.

Eine Luftaufbereitungsvorrichtung gemäß einem weiteren bevorzugten Ausführungsbeispiel der vorliegenden Erfindung ist schematisch in Figur 3 dargestellt. Auch in dieser Figur sind Elemente, die identisch zu Elementen der vorhergehenden Ausführungsbeispiele sind, mit identischen Bezugszeichen gekennzeichnet und werden nicht detailliert beschrieben.

Die Luftaufbereitungsvorrichtung gemäß Figur 3 unterscheidet sich von den vorhergehenden Ausführungsbeispielen insbesondere in der Ausgestaltung der ersten Einstellvorrichtung und der zweiten Einstellvorrichtung. Genauer gesagt ist die zweite Einstellvorrichtung 20 im Ausfiihrungsbeispiel gemäß Figur 3 als 4/2-Wegeventil ausgebildet und ermöglicht dadurch ein selektives Verbinden des Einlasses 22 mit den Leitungen 30, 32 und ein entsprechendes selektives Verbinden des Auslasses 28 mit den Leitungen 32, 30. Eine weitere Besonderheit diese Ausführungsform liegt darin, dass diese eine spezielle Anordnung von Drosseln 112, 114, 118, Ventilen 110, 112 und Leitungen 26, 34, 36 aufweist. Genauer gesagt sind bei diesem Aufbau sind die Leitungen 34, 36, welche die Kohlendioxidadsorptionseinheiten 14, 16 mit dem Auslass 24 verbinden mit Drosseln 114, 112 versehen. Des Weiteren ist der Auslass 24 mit einer Drossel 118 versehen. Diese Drosseln sind so aufeinander abgestimmt, dass stets ein Teil der Luft mit reduziertem Kohlendioxidgehalt, welche aus einer der Kohlendioxidadsorptionseinheiten 14, 16 über eine der Leitungen 34, 36 ausströmt, in die andere Kohlendioxidadsorptionseinheit strömt, welche regeneriert werden soll.

Bei dem in Figur 3 gezeigten Aufbau strömt Luft zunächst durch einen Luftfilter 90, ein Gebläse 92 und einen Kühler 108 in den Einlass 22, das Ventil 20 und durch die Leitung 32 in die zweite Kohlendioxidadsorptionseinheit 16, in welcher der druckbeaufschlagten Luft Kohlendioxid entzogen wird. Auf der stromabwärtigen Seite der Kohlendioxidadsorptionseinheit 16 wird Luft mit reduziertem Kohlendioxidgehalt über die Leitung 36 ausgegeben. Diese Luft strömt dann durch die Drossel 112 in die Auslassleitung 24 und zum Teil in die Leitung 34 und die mit dieser Leitung verbundene Kohlendioxidadsorptionseinheit 14. Der Teilstrom der Luft mit reduziertem Kohlendioxidgehalt wird demnach als Spülmedium für die Regenerierung der ersten Kohlendioxidadsorptionseinheit 14 verwendet. Das Spülmedium wird dann über die Leitung 30, das Ventil 20 und über einen Luftfilter 120 über den Auslass 28 in die Umgebung abgegeben.

Bei diesem Ausführungsbeispiel ist eine Stickstoffquelle 12 bzw. 18 über Leitungen 26 mit den Leitungen 34, 36 verbunden. Die Stickstoffquellen können wie bei dem in Figur 2 gezeigten Aufbau ein Gasbehälter 12 oder ein Stickstoff-Generator 18 sein.

Bei dem in Figur 3 gezeigten Aufbau, insbesondere mit der gezeigten Schaltstellung der zweiten Einstelleinrichtung 20, kann der Luft mit reduziertem Kohlendioxidgehalt, welche über die Leitung 36 in die Kohlendioxidadsorptionsvorrichtung 14 zugeführt wird, über die Leitung 26 Stickstoff zugeführt werden, um den Stickstoffgehalt des Spülmediums zu erhöhen. Zu diesem Zweck sind Ventile 110, 112 vorgesehen, die einen Teil der erfindungsgemäßen Einstelleinrichtung bilden können. Die Einstelleinrichtung kann die Ventile 110, 112 betätigen, um zur Bildung des Spülmediums eine gewünschte Menge Stickstoff in die Luft mit reduziertem Kohlendioxidgehalt einzuleiten. Wie bei den vorherigen Ausführungsbeispielen ist dazu eine in Figur 3 nicht gezeigte Regelungseinrichtung vorgesehen, die in der bereits beschriebenen Art und Weise ein Signal an die Einstelleinrichtung, hier die Ventile 110, 122, ausgeben kann, welches die Regelungseinrichtung basierend auf einem Signal von der Eingangsgrößenbestimmungsvorrichtung 6 erzeugt. Die Regelung der Ventile 110, 112 kann somit beispielsweise in Abhängigkeit einer durch den Sensor 6 erfassten Eingangsgröße, die beispielsweise den Kohlendioxidgehalt abbildet, erfolgen. Die in Verbindung mit den anderen Ausführungsbeispielen beschriebenen Regelungen können jedoch ebenfalls verwendet werden.

Somit ist ein System geschaffen, in welchem auf einfache Weise die Zusammensetzung des Spülmediums regelungstechnisch angepasst werden kann, um eine optimale Regenerierung einer Kohlendioxidadsorptionseinheit zu erreichen. Das in Figur 3 gezeigte System kann somit zur Regenerierung einer Kohlendioxidadsorptionseinheit einen Teil der in der anderen Kohlendioxidadsorptionseinheit erzeugten Luft mit reduziertem Kohlendioxidgehalt verwenden. Dabei enthält das Spülmedium für die Regenerierung bauartbedingt immer Luft mit reduziertem Kohlendioxidgehalt, welche bei Bedarf mit Stickstoff angereichert werden kann. Um die Strömungsrichtung durch die Kohlendioxidadsorptionseinheiten zu ändern bzw. die Kohlendioxidadsorptionseinheiten zwischen den Betriebsarten "Adsorbieren" und "Regenerieren" umzuschalten, muss bei dem in Figur 3 gezeigten Fall lediglich die zweite Einstelleinrichtung 20 betätigt werden.

## Patentansprüche

1. Luftaufbereitungsvorrichtung (2) mit
einer Kohlendioxidadsorptionsvorrichtung (4) zur Erzeugung von Luft mit reduziertem Kohlendioxidgehalt, wobei die Kohlendioxidadsorptionsvorrichtung (4) mit einem Spülmedium regenerierbar ist,
einer Regelungseinrichtung (8), die eine Zusammensetzung des Spülmediums basierend auf einer Eingangsgröße bestimmt und als Signal ausgibt,
einer Eingangsgrößenbestimmungsvorrichtung (6) zum Bestimmen der Eingangsgröße und zum Ausgeben eines korrespondierenden Signals an die Regelungseinrichtung (8), einer Einstelleinrichtung (10), die basierend auf dem Signal der Regelungseinrichtung (8) die Zusammensetzung des zur Regenerierung in die Kohlendioxidadsorptionsvorrichtung (4) einzuleitenden Spülmediums einstellt, wobei die Kohlendioxidadsorptionsvorrichtung (4) zwei Kohlendioxidadsorptionseinheiten (14a, 14b) aufweist, die mit der Einstelleinrichtung (10) so verbunden sind, dass Luft mit reduziertem Kohlendioxidgehalt zur Einstellung der Zusammensetzung des Spülmediums verwendet werden kann,
**dadurch gekennzeichnet, dass**
die Luftaufbereitungsvorrichtung (2) eine Stickstoffquelle (12) aufweist, die mit der Einstelleinrichtung (10) so verbunden ist, dass zur Einstellung der Zusammensetzung des Spülmediums Stickstoff verwendet werden kann.

2. Luftaufbereitungsvorrichtung nach 1, wobei die Stickstoffquelle (12) einen Gasbehälter und/oder einen Gasgenerator aufweist.

3. Luftaufbereitungsvorrichtung nach einem der vorhergehenden Ansprüche, ferner mit einer Druckregeleinrichtung (16), die zumindest dann, wenn sich die Kohlendioxidadsorptionsvorrichtung in einem betriebslosen Zustand befindet, den Innendruck der Kohlendioxidadsorptionseinheiten (14a, 14b) überwacht, und bei unterschreiten eines vorbestimmten Schwellenwerts auf einen Sollinnendruck erhöht.

4. Luftaufbereitungsvorrichtung (2) nach einem der vorhergehenden Ansprüche, wobei die Eingangsgrößenbestimmungsvorrichtung (6) einen Kohlendioxidsensor zum Messen des Kohlendioxidgehalts eines während der Regeneration aus einer
Kohlendioxidadsorptionseinheit abgeführten Spülmediums aufweist, und wobei die Regelungseinrichtung die Zusammensetzung des Spülmediums abhängig vom erfassten Kohlendioxidgehalt ändert.

5. Luftaufbereitungsvorrichtung (2) nach Anspruch 1 oder 2, wobei die Eingangsgrößenbestimmungsvorrichtung (6) einen Zähler aufweist, der die Anzahl an durchgeführten Regenerationszyklen erfasst, und wobei die Regelungseinrichtung den Stickstoffgehalt des Spülmediums durch Zugabe von Stickstoff für einen oder mehrere Regenerationszyklen erhöht, wenn die vom Zähler erfasste Anzahl an durchgeführten Regenerationszyklen eine vorbestimmte Anzahl übersteigt.

6. Luftaufbereitungsvorrichtung (2) nach Anspruch 1 oder 2, wobei die Eingangsgrößenbestimmungsvorrichtung (6) einen Zeitmesser aufweist, der die seit Beginn eines Regenerationszyklus verstrichene Zeit erfasst, wobei die Regelungseinrichtung den Stickstoffgehalt des Spülmediums durch Zugabe von Stickstoff erhöht, wenn eine vorbestimmte Zeit seit Beginn des Regenerationszyklus vergangen ist.

7. Luftaufbereitungsverfahren mit der Luftaufbereitungsvorrichtung (2) gemäß Anspruch 1 ausgeführt, mit den Schritten Erzeugen von Luft mit reduziertem Kohlendioxidgehalt mit einer regenerierbaren Kohlendioxidadsorptionsvorrichtung (4);
Regenerieren der Kohlendioxidadsorptionsvorrichtung (4) mit einem Spülmedium,
wobei die Zusammensetzung des Spülmediums basierend auf einer Eingangsgröße regelungstechnisch eingestellt wird,
**dadurch gekennzeichnet, dass**
als Spülmedium ein Gasgemisch basierend auf der erzeugten Luft mit reduziertem Kohlendioxidgehalt verwendet wird, wobei als ein weiteres Gas für eine Herstellung des Gasgemisches Stickstoff bereitgestellt wird.

8. Luftaufbereitungsverfahren nach Anspruch 7, ferner mit den Schritten Ermitteln des Innendrucks der Kohlendioxidadsorptionseinheiten (14a, 14b), und Erhöhen des Innendrucks auf einen Sollinnendruck, wenn ermittelt wird, dass ein vorbestimmter Druck unterschritten wurde.

## Claims

1. Air treatment device (2) with:
a carbon dioxide adsorption device (4) for production of air with reduced carbon dioxide content, wherein the carbon dioxide adsorption device (4) is regeneratable with a flushing medium,
a control device (8) that determines a composition of the flushing medium based on an input variable and outputs the composition as a signal,
an input variable determination device (6) for determining the input variable and for outputting a corresponding signal to the control device (8),
an adjusting device (10) that adjusts the composition of the flushing medium to be fed into the carbon dioxide adsorption device (4) for the regeneration based on the signal of the control device (8),
wherein the carbon dioxide adsorption device (4) comprises two carbon dioxide adsorption units (14a, 14b) which are connected with the adjusting device (10) in such a way that air with reduced carbon dioxide content can be used for adjustment of the composition of the flushing medium,
**characterized in that**
the air treatment device (2) comprises a nitrogen source (12) which is connected with the adjusting device (10) in such a way that nitrogen can be used for adjustment of the composition of the flushing medium.

2. Air treatment device according to claim 1, wherein the nitrogen source (12) comprises a gas container and/or a gas generator.

3. Air treatment device according to one of the preceding claims, further with a pressure control device (16) that at least then, if the carbon dioxide adsorption device is in a non-operational mode, monitors the internal pressure of the carbon dioxide adsorption units (14a, 14b) and when falling below a predetermined threshold increases the internal pressure to a target internal pressure.

4. Air treatment device (2) according to one of the preceding claims, wherein the input variable determination device (6) comprises a carbon dioxide sensor for measuring the carbon dioxide content of a flushing medium that is purged from a carbon dioxide adsorption unit during the regeneration, and wherein the control device changes the composition of the flushing medium in dependence on the sensed carbon dioxide content.

5. Air treatment device (2) according to claim 1 or 2, wherein the input variable determination device (6) comprises a counter that records the number of performed regeneration cycles and wherein the control device increases the nitrogen content of the flushing medium by addition of nitrogen for one or more regeneration cycles, if the number of performed regeneration cycles that has been recorded by the counter exceeds a predetermined number.

6. Air treatment device (2) according to claim 1 or 2, wherein the input variable determination device (6) comprises a timekeeper, that records the time elapsed since beginning of a regeneration cycle, wherein the control device increases the nitrogen content of the flushing medium by addition of nitrogen, if a predetermined time has been passed since the beginning of the regeneration cycle.

7. Air treatment method performed with the air treatment device (2) according to claim 1, with the steps of
producing air with reduced carbon dioxide content with a regeneratable carbon dioxide adsorption device (4);
regenerating the carbon dioxide adsorption device (4) with a flushing medium, wherein the composition of the flushing medium is adjusted by means of control technology based on an input variable,
**characterized in that**
a gas mixture based on the produced air with reduced carbon dioxide content is used as flushing medium, wherein for a production of the gas mixture nitrogen as a further gas is provided.

8. Air treatment method according to claim 7, further with the steps of determining the internal pressure of the carbon dioxide adsorption units (14a, 14b), and increasing the internal pressure up to a target internal pressure, if it is determined that it is below a predetermined pressure.

## Revendications

1. Dispositif de conditionnement d'air (2) comprenant
un dispositif d'adsorption de dioxyde de carbone (4) pour la génération d'air ayant une teneur réduite en dioxyde de carbone, le dispositif d'adsorption de dioxyde de carbone (4) étant régénérable avec un milieu de rinçage,
un appareil de régulation (8), qui détermine et émet en tant que signal une composition du milieu de rinçage sur la base d'une grandeur d'entrée,
un dispositif de détermination de grandeur d'entrée (6) pour la détermination de la grandeur d'entrée et pour l'émission d'un signal correspondant vers l'appareil de régulation (8),
un appareil d'ajustement (10) qui, sur la base du signal de l'appareil de régulation (8), ajuste la composition du milieu de rinçage à introduire pour la régénération dans le dispositif d'adsorption de dioxyde de carbone (4),
le dispositif d'adsorption de dioxyde de carbone (4) comprenant deux unités d'adsorption de dioxyde de carbone (14a, 14b), qui sont raccordées avec l'appareil d'ajustement (10) de telle sorte que de l'air ayant une teneur réduite en dioxyde de carbone puisse être utilisé pour l'ajustement de la composition du milieu de rinçage,
**caractérisé en ce que**
le dispositif de conditionnement d'air (2) comprend une source d'azote (12), qui est raccordée avec l'appareil d'ajustement (10) de telle sorte que de l'azote puisse être utilisé pour l'ajustement de la composition du milieu de rinçage.

2. Dispositif de conditionnement d'air selon la revendication 1, dans lequel la source d'azote (12) comprend un contenant de gaz et/ou un générateur de gaz.

3. Dispositif de conditionnement d'air selon l'une quelconque des revendications précédentes, comprenant en outre un appareil de régulation de pression (16) qui, au moins lorsque le dispositif d'adsorption de dioxyde de carbone se trouve dans un état inactivé, contrôle la pression intérieure des unités d'adsorption de dioxyde de carbone (14a, 14b) et, en cas de passage en dessous d'une valeur seuil prédéterminée, l'augmente à une pression intérieure de consigne.

4. Dispositif de conditionnement d'air (2) selon l'une quelconque des revendications précédentes, dans lequel le dispositif de détermination de grandeur d'entrée (6) comprend un capteur de dioxyde de carbone pour la mesure de la teneur en dioxyde de carbone d'un milieu de rinçage déchargé d'une unité d'adsorption de dioxyde de carbone pendant la régénération, et dans lequel l'appareil de régulation modifie la composition du milieu de rinçage en fonction de la teneur en dioxyde de carbone déterminée.

5. Dispositif de conditionnement d'air (2) selon la revendication 1 ou 2, dans lequel le dispositif de détermination de grandeur d'entrée (6) comprend un compteur, qui détermine le nombre de cycles de régénération réalisés, et dans lequel l'appareil de régulation augmente la teneur en azote du milieu de rinçage par ajout d'azote pour un ou plusieurs cycles de régénération lorsque le nombre de cycles de régénération réalisés déterminé par le compteur dépasse un nombre prédéterminé.

6. Dispositif de conditionnement d'air (2) selon la revendication 1 ou 2, dans lequel le dispositif de détermination de grandeur d'entrée (6) comprend un chronomètre qui détermine le temps écoulé depuis le début d'un cycle de régénération, l'appareil de régulation augmentant la teneur en azote du milieu de rinçage par ajout d'azote lorsqu'un temps prédéterminé depuis le début du cycle de régénération s'est écoulé.

7. Procédé de conditionnement d'air réalisé avec le dispositif de conditionnement d'air (2) selon la revendication 1, comprenant les étapes suivantes :
la génération d'air ayant une teneur réduite en dioxyde de carbone avec un dispositif d'adsorption de dioxyde de carbone régénérable (4) ;
la régénération du dispositif d'adsorption de dioxyde de carbone (4) avec un milieu de rinçage, la composition du milieu de rinçage étant ajustée par régulation sur la base d'une grandeur d'entrée,
**caractérisé en ce que**
un mélange gazeux à base de l'air généré ayant une teneur réduite en dioxyde de carbone est utilisé en tant que milieu de rinçage, de l'azote étant fourni en tant que gaz supplémentaire pour une fabrication du mélange gazeux.

8. Procédé de conditionnement d'air selon la revendication 7, comprenant en outre les étapes suivantes :
la détermination de la pression intérieure des unités d'adsorption de dioxyde de carbone (14a, 14b), et
l'augmentation de la pression intérieure à une pression intérieure de consigne lorsqu'il est déterminé qu'un passage en dessous d'une pression prédéterminée a eu lieu.
